(19) Europäisches Patentamt / European Patent Office / Office européen des brevets

(11) **EP 4 238 421 B1**

(12) **EUROPEAN PATENT SPECIFICATION**

(45) Date of publication and mention of the grant of the patent:
**03.12.2025 Bulletin 2025/49**

(21) Application number: **21886358.7**

(22) Date of filing: **28.10.2021**

(51) International Patent Classification (IPC):
**A23J 3/34** (2006.01)  **A23C 11/10** (2025.01)
**A23J 3/14** (2006.01)

(52) Cooperative Patent Classification (CPC):
**A23C 11/10; A23J 3/14; A23J 3/346**

(86) International application number:
**PCT/JP2021/039922**

(87) International publication number:
**WO 2022/092241 (05.05.2022 Gazette 2022/18)**

(54) **METHOD FOR PRODUCING VEGETABLE PROTEIN-PROCESSED PRODUCT HAVING IMPROVED FOOD TEXTURE**

VERFAHREN ZUR HERSTELLUNG EINES MIT PFLANZLICHEM PROTEIN VERARBEITETEN PRODUKTS MIT VERBESSERTER LEBENSMITTELTEXTUR

PROCÉDÉ DE FABRICATION DE PRODUIT TRANSFORMÉ AUX PROTÉINES VÉGÉTALES DONT LA TEXTURE EST AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2020 CN 202011187189**

(43) Date of publication of application:
**06.09.2023 Bulletin 2023/36**

(73) Proprietors:
• **Amano Enzyme Inc.**
**Nagoya-shi**
**Aichi 460-8630 (JP)**
• **Amano Enzyme Manufacturing (China), Ltd.**
**Suqian City, Jiangsu Province, 223700 (CN)**

(72) Inventors:
• **WANG, Panhui**
**Wuxi, Jiangsu 214122 (CN)**
• **ZHAO, Shaohui**
**Wuxi, Jiangsu 214122 (CN)**

(74) Representative: **Müller-Boré & Partner**
**Patentanwälte PartG mbB**
**Friedenheimer Brücke 21**
**80639 München (DE)**

(56) References cited:
**WO-A1-2008/001940   CN-A- 101 991 163**
**JP-A- 2011 206 048   JP-A- 2012 034 654**
**JP-A- S5 658 488   JP-A- S56 148 284**
**US-A1- 2017 318 841**

• **TOMOHIRO KODERA: "Improvement of physical properties by α-glucosidase and application to food", DENPUN / STARCH, no. 53, 1 November 2008 (2008-11-01), JP, pages 13 - 17, XP009536118, ISSN: 0385-9827**
• **FUKAYA IWAO, NOBUMASA YOKOI, TOSHIHIDE SAKAI, HARUHIKO TOKUMURA: "Studies on Mirin Making with Use of Transglucosidase", NIPPON JOZO KYOKAI ZASSHI - JOURNAL OF THE SOCIETY OF BREWING,JAPAN, NIPPON JOZO KYOKAI, TOKYO,, JP, vol. 78, no. 7, 15 July 1983 (1983-07-15), JP , pages 552 - 557, XP055925673, ISSN: 0369-416X, DOI: 10.6013/ jbrewsocjapan1915.78.552**

**Description**

TECHNICAL FIELD

The present invention relates to a production method for a processed product of a plant protein food and drink material and/or a plant protein food and drink. More specifically, the present invention relates to a processing technique of improving the texture of a plant protein food and drink material and/or a plant protein food and drink.

BACKGROUND ART

Beverages rich in nutrients such as proteins have been widely familiar to people since nutrients can be easily taken. On the other hand, on the basis of an increase in the number of vegetarian people, allergic problems, religious reasons, and the like in recent years, soy milk using soybeans rich in a plant protein as a raw material has been widely spread as an alternative to animal milk typified by cow milk.

Regarding a soybean protein, various modification treatments have been studied for the purpose of improving existing characteristics thereof, providing food products having new preference characteristics, and the like.

For example, Patent Document 1 (JP 2000-50887 A) describes that the yield of soybean protein from soybean powder is improved by subjecting the soybean powder to a protein deamidase treatment. Patent Document 2 (JP 2008-283900 A) describes that a polyglycerol fatty acid ester containing a fatty acid having 12 to 22 carbon atoms as a main constituent fatty acid is effective as a dispersion stabilizer for soy milk. Patent Document 3 (JP 2015-159765 A) describes that by subjecting soy milk to a deamidation treatment with a cation exchange resin and/or a phytic acid removal treatment with an anion exchange resin, precipitation hardly occurs with respect to a coagulant.

On the other hand, from the viewpoint of coping with further diversification of preference and the like, further options other than soy milk are required for food and beverages containing plant proteins, and milk using plant materials other than soybeans as raw materials (plant milk) has been developed.

For example, among plant milk, oat milk has a characteristic different from other grain milk in that the oat milk is rich in lipids, β-glucans, and minerals in addition to proteins, and a high nutritional value of the oat milk has attracted attention. For example, Patent Document 4 (US 6,451,361 B1) describes that by treating an oat suspension with an α amylase and a β amylase, the problem of high viscosity is solved, and an oat dispersion in which a protein and a β glucan are maintained is obtained. Patent Document 5 (CN 101991163 A) describes that maltooligosaccharide is produced by a treatment using an α amylase, a β amylase, and a transglucosidase to improve the prebiotic action of an oat beverage. US 2017/318841 A1 discloses a process for preparing an oat drink with improved protein content comprising a step of treatment with a protein deamidase.

JP 2012 034654 A discloses a process of preparing a taste improver by treating with transglucosidase, with the effect of imparting sweetness and umami taste.

SUMMARY OF THE INVENTION

PROBLEMS TO BE SOLVED BY THE INVENTION

Oat milk has high nutritional value and has high value as a health food. Since oat milk has unique sweetness, and when oat milk is prepared while suppressing the amount of water and creamy feeling can also be obtained, oat milk is attracting more and more attention also in terms of flavor and texture. On the other hand, since oat milk contains a large amount of sugar, when oat milk is prepared without suppressing the amount of water for the purpose of suppressing carbohydrate or sweetness, creamy feeling is lost. There is still room for improvement in the creamy feeling of oat milk regardless of the amount of water at the time of preparing oat milk. Techniques for improving the texture have not been sufficiently studied not only in oat milk but also in various plant protein foods and drinks and materials thereof. In view of the possibility of spread and expansion of the plant protein food and drink and the material thereof in the future, a technique capable of improving the texture of the plant protein food and drink and the material thereof is desired in order to cope with diversification of consumers' taste preferences and/or expansion of cooking applications.

An object of the present invention is to provide a processing technique capable of improving the texture of a plant protein food and drink and a material thereof.

MEANS FOR SOLVING THE PROBLEM

The present inventors have conducted intensive studies, and as a result, have found that the texture of a plant protein food and drink and a material thereof can be improved by treating the plant protein food and drink and the material thereof with a protein deamidase and a transglucosidase. That is, the present invention provides inventions of the following aspects.

Item 1. A production method for a processed product of a plant protein food and drink material and/or a plant protein food and drink, the production method including a step of treating a plant protein food and drink material and/or a plant protein food and drink with a protein deamidase and a transglucosidase.

Item 2. The production method described in item 1, in which the plant protein food and drink material and/or the plant protein food and drink is oat milk.

Item 3. The production method described in item 1 or 2, in which the protein deamidase is used in an amount of 0.05 U or more per 1 g of a plant protein.

Item 4. The production method described in any one of items 1 to 3, in which the transglucosidase is used in an amount of 5 U or more per 1 g of a plant protein raw material.

Item 5. The production method described in any one of items 1 to 4, in which the transglucosidase is used in an amount of 1 U or more per 1 U of the protein deamidase.

Item 6. The production method described in any one of items 1 to 5, further including a step of preparing the plant protein food and drink material and/or the plant protein food and drink using 0.5 parts by weight or more of water per 1 part by weight of a plant protein raw material.

Item 7. The production method described in any one of items 1 to 6, in which an $\alpha$-amylase is used in combination with the protein deamidase and the transglucosidase.

Item 8. A texture improver for a plant protein food and drink material and/or a plant protein food and drink, the texture improver containing a protein deamidase and a transglucosidase.

Item 9. A sweetness reducer for a plant protein food and drink material and/or a plant protein food and drink, the sweetness reducer containing a protein deamidase and a transglucosidase.

ADVANTAGES OF THE INVENTION

According to the present invention, there is provided a processing technique capable of improving the texture of a plant protein food and drink and a material thereof.

EMBODIMENTS OF THE INVENTION

1. Production Method for Processed Product of Plant Protein Food and Drink Material and/or Plant Protein Food and Drink

A production method for a processed product of a plant protein food and drink material and/or a plant protein food and drink of the present invention includes a step of treating a plant protein food and drink material and/or a plant protein food and drink with a protein deamidase and a transglucosidase. The production method for a processed product of a plant protein food and drink material and/or a plant protein food and drink of the present invention may further include a step of preparing the plant protein food and drink material and/or the plant protein food and drink using 0.5 parts by weight or more of water per 1 part by weight of a plant protein raw material. Hereinafter, the production method for a processed product of a plant protein food and drink material and/or a plant protein food and drink of the present invention will be described in detail.

1-1. Plant Protein Food and Drink Material and/or Plant Protein Food and Drink

The plant protein food and drink material and/or the plant protein food and drink used in the present invention is not particularly limited. The plant protein food and drink material refers to a food and drink material which contains a plant protein, is not directly eaten and/or drunk, but is premised on cooking, and is used as a food and drink material. The plant protein food and drink refers to a food and drink which is directly eaten and/or drunk. Specific examples of the plant protein food and drink material and/or the plant protein food and drink (hereinafter, these are collectively referred to as "plant protein food and drink material and the like") include plant milk, plant cream, plant substitute meat, plant substitute cheese, and a plant protein solution. Among these plant protein food and drink material and the like, from the viewpoint of further improving the effect of the present invention, those having fluidity such as plant milk, plant cream, and a plant protein solution are preferable, and plant milk is more preferable.

A plant edible part to be a raw material of the plant protein (hereinafter, described as "plant protein raw material") contained in the plant protein food and drink material and the like is not particularly limited, and examples thereof include cereals such as wheat and barley, rice, and beans, and nuts. Among these plants, from the viewpoint of further improving the effect of the present invention, cereals are preferable, wheat and barley are more preferable, and oat is further preferable.

A specific method for preparing the plant protein food and drink material and the like using a plant protein raw material can be appropriately determined by those skilled in the art. For example, the amount of water per 1 part by weight of the plant protein raw material used for preparation of the plant protein food and drink material and the like is, for example, 0.5 parts by weight or more. Since the present invention is excellent in the texture-improving effect of the plant protein food and drink material and the like, even in the case of a plant protein food and drink material and the like prepared using a larger amount of water, which originally reduce or lose the texture, it is possible to effectively exhibit the texture-improving effect. From such a viewpoint, a suitable example of the amount of water with respect to 1 part by weight of the plant protein raw material is, for example, 1 part by weight or more, preferably 2 parts by weight or more, more preferably 3 parts by weight or more, further preferably 4 parts by weight or more, still more preferably 4.5 parts by weight or more, even more preferably 4.8 parts by weight or more, and particularly preferably 5 parts by weight or more.

The upper limit of the range of the amount of water per 1 part by weight of the plant protein raw material used for preparation of the plant protein food and drink material and the like is not particularly limited, and is, for example, 20 parts by weight or less. Since the present invention is also excellent in the sweetness-reducing effect of the plant protein food and drink material and the like, even in the case of a plant protein food and drink material and the like prepared using a smaller amount of water, which are originally likely to feel sweetness, it is also possible to effectively reduce the sweetness. From such a viewpoint and/or the viewpoint of further improving the texture-improving effect, a suitable example of the upper limit of the range of the amount of water per 1 part by weight of the plant protein raw material is, for example, 10 parts by weight or less, preferably 8 parts by weight or less, more preferably 6 parts by weight or less, still more preferably 5.5 parts by weight or less, and even more preferably 5.2 parts by weight or less.

In the present invention, oat milk can be used as a particularly preferable example of the plant protein food and drink material and the like. Examples of the oat milk include liquid materials obtained by filtering a heat-treated oat slurry (for example, porridge of oat powder, a crushed product of oatmeal porridge, and the like).

The amount of water per 1 part by weight of oat used for preparation of the oat milk (that is, the amount of water with respect to 1 part by weight of oat in the heat-treated oat slurry) is, for example, 0.5 parts by weight or more, 1 part by weight or more, or 2 parts by weight or more. Since the present invention is excellent in the creamy feeling-enhancing effect of the oat milk, even in the case of oat milk prepared using a larger amount of water, which originally reduces or loses the creamy feeling, it is possible to effectively enhance the creamy feeling. From such a viewpoint, a suitable example of the amount of water with respect to 1 part by weight of oat is, for example, 3 parts by weight or more, preferably 4 parts by weight or more, more preferably 4.5 parts by weight or more, further preferably 4.8 parts by weight or more, and still more preferably 5 parts by weight or more.

The upper limit of the range of the amount of water per 1 part by weight of oat used for preparation of the oat milk is not particularly limited, and is, for example, 20 weights or less or 10 parts by weight or less. Since the present invention is also excellent in the sweetness-reducing effect of the oat milk, even in the case of oat milk prepared using a smaller amount of water, which is originally likely to feel sweetness, it is also possible to effectively reduce the sweetness. From such a viewpoint and/or the viewpoint of further improving the creamy feeling-enhancing effect, a suitable example of the upper limit of the range of the amount of water with respect to 1 part by weight of oat is, for example, 8 parts by weight or less, preferably 6 parts by weight or less, more preferably 5.5 parts by weight or less, and still more preferably 5.2 parts by weight or less.

The temperature of the heating treatment of the oat slurry is, for example, 83 to 100°C, preferably 85 to 96°C, and more preferably 88 to 93°C. The number of meshes of a sieve used for filtering the heat-treated oat slurry may be such a degree that coarse insoluble fibers of oat are removed, and is, for example, 50 to 70 mesh and preferably 55 to 65 mesh.

1-2. Protein Deamidase

The type, origin, and the like of the protein deamidase used in the present invention are not particularly limited as long as the protein deamidase is an enzyme that exhibits an action of decomposing an amide group-containing side chain of a protein without cleaving peptide bonds and crosslinking the protein. Examples of the protein deamidase include commercially available products of a protein deamidase derived from the genus Chryseobacterium, Flavobacterium, Empedobacter, Sphingobacterium, Aureobacterium, or Myroides, and a protein glutaminase derived from the genus Chryseobacterium, which are disclosed in JP 2000-50887 A, JP 2001-218590 A, and WO 2006/075772 A1. These protein deamidases may be used singly or in combination of a plurality of kinds thereof.

Among these protein deamidases, from the viewpoint of further enhancing the texture-improving effect of the plant protein food and drink material and the like, a protein deamidase derived from the genus Chryseobacterium is preferable, a protein glutaminase derived from the genus Chryseobacterium is more preferable, and a protein glutaminase derived from Chryseobacterium proteolyticum is further preferable.

The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a microorganism that secretes protein deamidase, an enzyme can be separated and/or purified after recovering bacterial cells from the culture solution in advance by filtration, a centrifugal treatment, or the like, as necessary. In the case of using a microorganism that does not secrete protein deamidase, an enzyme can be separated and/or purified after recovering bacterial cells from the culture solution in advance as necessary and then disrupting the bacterial cells by a pressurization treatment, an ultrasonic treatment, or the like to expose an enzyme. As an enzyme separation and/or purification method, a known protein separation and/or purification method can be used without particular limitation, and examples thereof include a centrifugal separation method, a UF concentration method, a salting-out method, and various chromatography methods using an ion-exchange resin or the like. The separated and/or purified enzyme can be powdered by a drying method such as freeze-drying or reduced-pressure drying and prepared as an enzymatic agent, and can also be powdered using an appropriate excipient and/or drying aid in the drying method.

As the protein deamidase, a commercially available enzymatic agent can also be used, and examples of a preferred commercially available product include a protein glutaminase "Amano" 500 manufactured by Amano Enzyme Inc.

The titer of the enzymatic agent containing the protein deamidase used in the present invention is not particularly limited, and is, for example, 10 to 50000 U, preferably 100 to 10000 U, more preferably 200 to 800 U/g, further preferably 300 to 700 U/g, still more preferably 400 to 600 U/g, and even more preferably 450 to 550 U/g.

The used amount of the protein deamidase is not particularly limited, but the used amount of the protein deamidase per 1 g of the plant protein in the plant protein food and drink material and the like is, for example, 0.05 U or more, and from the viewpoint of further enhancing the texture-improving effect of the plant protein food and drink material and the like, the used amount thereof is preferably 0.1 U or more, more preferably 0.2 U or more, further preferably 0.3 U or more, still more preferably 0.5 U or more, even more preferably 1.0 U or more, further more preferably 1.5 U or more, and particularly preferably 2.0 U or more. The upper limit of the used amount range of the protein deamidase per 1 g of the plant protein is not particularly limited, and is, for example, 25 U or less, 22 U or less, 17 U or less, 14 U or less, 10 U or less, 8 U or less, or 6 U or less.

The used amount of the protein amidase per 1 g of the plant protein raw material used in the plant protein food and drink material and the like is, for example, 0.006 U or more, and from the viewpoint of further enhancing the texture-improving effect of the plant protein food and drink material and the like, the used amount thereof is preferably 0.012 U or more, more preferably 0.024 U or more, further preferably 0.036 U or more, still more preferably 0.06 U or more, even more preferably 0.12 U or more, further more preferably 0.18 U or more, and particularly preferably 0.24 U or more. The upper limit of the used amount range of the protein deamidase per 1 g of the plant protein raw material is not particularly limited, and is, for example, 3 U or less, 2.6 U or less, 2 U or less, 1.7 U or less, 1.2 U or less, 1 U or less, or 0.7 U or less.

In particular, when the plant protein food and drink material and the like are oat milk, the used amount of the protein deamidase per 1 g of the oat protein in the oat milk is preferably 0.5 U or more, and from the viewpoint of further enhancing the creamy feeling-enhancing effect of the oat milk, the used amount thereof is more preferably 1.5 U or more, further preferably 2 U or more, still more preferably 2.5 U or more, even more preferably 3 U or more, particularly preferably 4 U or more, and most preferably 4.5 U or more. The upper limit of the used amount range of the protein deamidase per 1 g of the oat protein is not particularly limited, and is, for example, 25 U or less, 22 U or less, 17 U or less, 14 U or less, 10 U or less, 8 U or less, or 6 U or less.

When the plant protein food and drink material and the like are oat milk, the used amount of the protein deamidase per 1 g of oat used in the oat milk is, for example, 0.06 U or more, and from the viewpoint of further enhancing the creamy feeling-enhancing effect of the oat milk, the used amount thereof is preferably 0.18 U or more, more preferably 0.24 U or more, further preferably 0.3 U or more, still more preferably 0.36 U or more, even more preferably 0.48 U or more, and particularly preferably 0.54 U or more. The upper limit of the used amount range of the protein deamidase per 1 g of oat is not particularly limited, and is, for example, 3 U or less, 2.6 or less, 2 U or less, 1.7 U or less, 1.2 U or less, 1 U or less, or 0.7 U or less.

For the activity of the protein deamidase, benzyloxycarbonyl-L-glutaminylglycine (Z-Gln-Gly) is used as a substrate, and the amount of enzyme that liberates 1 $\mu$mol of ammonia per minute is defined as 1 unit (1 U).

1-3. Transglucosidase

The type, origin, and the like of the transglucosidase used in the present invention are not particularly limited as long as the transglucosidase is an enzyme that exhibits transglycosylation activity of converting $\alpha$-1,4 bonds into $\alpha$-1,6 bonds. Examples of the transglucosidase include transglucosidases derived from the genus Xanthomonas such as Xanthomonas campestris; the genus Talaromyces such as Talaromyces duponti; the genus Thermoascus such as Thermoascus aurantiacus; and the genus Aspergillus such as Aspergellus niger, Aspergillus oryzae, Aspergillus flavus, and Aspergillus sojae, which are disclosed in JP 2001-46096 A, JP 2002-17395 A, JP 2002-125692 A, and WO 2016063331 A1. These transglucosidases may be used singly or in combination of a plurality of kinds thereof.

Among these transglucosidases, from the viewpoint of further enhancing the texture-improving effect of the plant protein food and drink material and the like, a transglucosidase derived from the genus Aspergillus is preferable, and a transglucosidase derived from Aspergellus niger or the like is more preferable.

The transglucosidase can be prepared from a culture solution of microorganisms from which the transglucosidase is derived. The specific preparation method is the same as the method for preparing the protein deamidase described above.

As the transglucosidase, a commercially available enzymatic agent can also be used, and examples of a preferred commercially available product include a transglucosidase L "Amano" manufactured by Amano Enzyme Inc.

The used amount of the transglucosidase is not particularly limited, but the used amount of the transglucosidase per 1 g of the plant protein raw material used in the plant protein food and drink material and the like is, for example, 5 U or more, and from the viewpoint of further enhancing the texture-improving effect of the plant protein food and drink material and the like, the used amount thereof is preferably 10 U or more, more preferably 20 U or more, further preferably 50 U or more, still more preferably 100 U or more, and particularly preferably 150 U or more. The upper limit of the used amount range of the transglucosidase per 1 g of the plant protein raw material is not particularly limited, and is, for example, 5000 U or less or 1500 U or less.

When the plant protein food and drink material and the like are oat milk, the used amount of the transglucosidase per 1 g of oat used in the oat milk is, for example, 5 U or more, and from the viewpoint of further enhancing the creamy feeling-enhancing effect of the oat milk, the used amount thereof is preferably 10 U or more, more preferably 20 U or more, further preferably 50 U or more, still more preferably 100 U or more, and particularly preferably 150 U or more. The upper limit of the used amount range of the transglucosidase per 1 g of oat is not particularly limited, and is, for example, 5000 U or less, 1500 U or less, 1000 U or less, 500 U or less, 300 U or less, or 200 U or less.

The ratio of the used amount of the protein amidase and the used amount of the transglucosidase is determined depending on the used amount of each enzyme, and from the viewpoint of further enhancing the texture-improving effect of the plant protein food and drink material and the like, the amount of the transglucosidase per 1 U of the protein amidase is preferably 1 U or more, preferably 10 U or more, more preferably 50 U or more, further preferably 100 U or more, still more preferably 150 U or more, and even more preferably 200 U or more. The upper limit of the used amount ratio range of the transglucosidase per 1 U of the protein deamidase is not particularly limited, and is, for example, 200000 U or less or 20000 U or less.

When the plant protein food and drink material and the like are oat milk, from the viewpoint of further enhancing the effect of improving the creamy feeling of the oat milk, the amount of the transglucosidase per 1 U of the protein amidase is preferably 1 U or more, preferably 10 U or more, more preferably 50 U or more, further preferably 100 U or more, still more preferably 150 U or more, even more preferably 200 U or more, and particularly preferably 240 U or more. When the plant protein food and drink material and the like are oat milk, the upper limit of the used amount ratio range of the transglucosidase per 1 U of the protein deamidase is not particularly limited, and is, for example, 200000 U or less, 20000 U or less, 2000 U or less, 1000 U or less, 500 U or less, or 300 U or less.

For the activity of the transglucosidase, α-methyl-D-glucoside is used as a substrate, and the amount of enzyme that produces 1 μg of glucose per minute is defined as 1 unit (1 U).

1-4. α-Amylase

In the present invention, it is preferable that in the step of treating a plant protein food and drink material and the like with a protein deamidase and a transglucosidase, an α-amylase is used in combination with the protein deamidase and the transglucosidase.

The origin of the α-amylase is not particularly limited, and examples thereof include α amylases derived from the genus Aspergillus such as Aspergillus oryzae and Aspergillus niger; and the genus Bacillus such as Bacillus amyloliquefaciens, Bacillus subtilis, and Bacillus licheniformis, an α-amylase derived from the genus Bacillus is preferable, and an α-amylase derived from Bacillus amyloliquefaciens species is more preferable.

The used amount of the α-amylase per 1 g of the plant protein raw material is, for example, 0.5 to 50 U, preferably 0.8 to 10 U, more preferably 1 to 5 U, and further preferably 1.2 to 1.5 U.

For the activity of the α-amylase, soluble starch is used as a substrate, and the amount of enzyme that increases the reducing power corresponding to 10 mg of glucose per 30 minutes is defined as 1 unit (1 U).

1-5. Reaction Conditions, etc.

In the step of treating a plant protein food and drink material and the like with a protein deamidase and a transglucosidase, a protein deamidase, a transglucosidase, and as necessary, α amylase together with these enzymes are added to the plant protein food and drink material and the like to prepare a composition of the plant protein food and drink material and the like containing the plant protein food and drink material and the like, the protein deamidase, and the transglucosidase, or containing the plant protein food and drink material and the like, the protein deamidase, the transglucosidase, and the α-amylase, and the composition of the plant protein food and drink material and the like is maintained in a heated state, so that the enzyme treatment reaction can be caused to proceed.

The heating temperature (enzyme treatment reaction temperature) of the composition of the plant protein food and drink material and the like is not particularly limited, and can be appropriately determined by those skilled in the art according to the optimal temperature of the enzyme to be used and/or thermal characteristics of the plant protein food and drink material and the like, etc., but is, for example, 40 to 70°C, preferably 50 to 70°C, more preferably 55 to 65°C, and further preferably 58 to 62°C.

The enzyme treatment reaction time of the composition of the plant protein food and drink material and the like is not particularly limited, and may be appropriately determined according to the preparation scale of the composition, but is, for example, 0.5 hours or longer and preferably 1 hour or longer. The upper limit of the range of the enzyme treatment reaction time is not particularly limited, and is, for example, 24 hours or shorter, 12 hours or shorter, 8 hours or shorter, or 6 hours or shorter.

The enzyme treatment reaction can be terminated by an enzyme deactivation treatment with high heat. The enzyme deactivation treatment temperature is, for example, 85°C or higher and preferably 90°C or higher, and the enzyme deactivation treatment time is, for example, 5 to 25 minutes and preferably 10 to 20 minutes.

The composition of the plant protein food and drink material and the like after the end of the enzyme treatment is subjected to a post-treatment such as filtration as necessary to obtain a processed product of the plant protein food and drink material and the like. The processed product of the plant protein food and drink material and the like can be obtained as a plant protein food and drink material and the like with improved texture as compared with a plant protein food and drink material and the like before the enzyme treatment. In particular, when the plant protein food and drink material and the like are oat milk, an oat milk processed product can be obtained as oat milk with enhanced creamy feeling.

2. Use Application of Enzymatic Agent Containing Protein Deamidase and Transglucosidase

As described above, the combination of the protein deamidase and the transglucosidase can improve the texture of the plant protein food and drink material and the like. In the present invention, the modification of the texture of the plant protein food and drink material and the like includes enhancement of smoothness, and particularly preferably includes enhancement of creamy feeling. The smoothness refers to fineness of a processed product of the plant protein food and drink material and the like felt when the processed product is contained in the mouth. The creamy feeling refers to a feeling in which fineness and stickiness of a processed product of the plant protein food and drink material and the like felt when the processed product is contained in the mouth are combined with each other and cling to the tongue.

Therefore, the present invention also provides a texture improver for a plant protein food and drink material and/or a plant protein food and drink, the texture improver containing a protein deamidase and a transglucosidase.

In particular, since the combination of the protein deamidase and the transglucosidase can enhance the creamy feeling of the oat milk, the present invention also provides use of an enzymatic agent containing a protein deamidase and a transglucosidase for production of a creamy feeling enhancer for oat milk, and also provides a creamy feeling enhancer for oat milk, the creamy feeling enhancer containing a protein deamidase and a transglucosidase.

The combination of the protein deamidase and the transglucosidase also makes it possible to improve the flavor that reduces the sweetness of the plant protein food and drink material and the like, in addition to the improvement of the texture. Therefore, the present invention also provides a sweetness reducer for a plant protein food and drink material and/or a plant protein food and drink, the sweetness reducer containing a protein deamidase and a transglucosidase.

In particular, when the plant protein food and drink material and the like are oat milk, the combination of the protein deamidase and the transglucosidase has a high flavor-improving effect of reducing the sweetness peculiar to oat milk. Therefore, the present invention also provides a sweetness reducer for oat milk, the sweetness reducer containing a protein deamidase and a transglucosidase.

The type, used amount, and the like of the component to be used in the texture improver and the sweetness reducer are as described in the section of "1. Production Method for Processed Product of Plant Protein Food and Drink Material and/or Plant Protein Food and Drink".

EXAMPLES

Hereinafter, the present invention will be specifically described by means of Examples; however, the present invention is not to be construed as being limited to the following Examples.

Used Enzyme

Details of enzymes used in the following test examples are as follows.

[Table 1]

| Enzyme type | Abbreviation | Trade name | Origin |
|---|---|---|---|
| Protein glutaminase | PG | Protein-glutaminase | Chryseobacterium proteolyticum |
| α-Amylase | E5NC | Kleistase E5NC | Bacillus amyloliquefaciens |
| α-Amylase | BZ-LC | Biozyme LC | Aspergillus oryzae |
| Hemicellulase | HC90 | Hemicellulase 90 | Aspergillus niger |
| Maltotriosyl transferase | GLT | glycotransferrase | Aeribacillus |
| Transglucosidase | TGL | Transglucosidase L | Aspergillus niger |

The activity of the protein deamidase (protein glutaminase) was measured by the following method.

(1) To 1 ml of a 0.2 M phosphate buffer (pH 6.5) containing 30 mM Z-Gln-Gly, 0.1 ml of an aqueous solution containing a protein deamidase was added, the mixture was incubated at 37°C for 10 minutes, and then 1 ml of a 0.4 M TCA solution was added to stop the reaction. As a blank, to 1 ml of a 0.2 M phosphate buffer (pH 6.5) containing 30 mM Z-Gln-Gly, 1 ml of a 0.4 M TCA solution was added, 0.1 ml of an aqueous solution (enzyme solution) containing a protein deamidase was further added, and the mixture was incubated at 37°C for 10 minutes.
(2) The amount of ammonia generated in the reaction solution was measured for the solution obtained in (1) using Ammonia Test Wako (Wako Pure Chemical Industries, Ltd.). The ammonia concentration in the reaction solution was determined from a calibration curve representing the relationship between the ammonia concentration and the absorbance (630 nm) prepared using an ammonia standard solution (ammonium chloride).
(3) The activity of the protein deamidase was calculated from the following formula with the amount of enzyme that produces 1 μmol of ammonia per minute being defined as 1 unit (1 U). In the formula, the reaction solution amount is 2.1, the enzyme solution amount is 0.1, and Df is a dilution rate of the enzyme solution. 17.03 is a molecular weight of ammonia.

[Mathematical Formula 1]

$$\text{Protein deamidase activity (U/mL)}$$
$$= \text{Ammonia concentration in reaction solution (mg/L)} \times (1/17.03)$$
$$\times (\text{reaction solution amount/enzyme solution amount}) \times (1/10) \times \text{Df}$$

The activity of the transglucosidase was measured by the following method.

(1) 2.0 g of α-methyl-D-glucoside was weighed and was dissolved by adding water to make 100 mL, thereby preparing an α-methyl-D-glucoside solution. In a test tube, 1 mL of the α-methyl-D-glucoside solution and 1 mL of a 0.02 mol/L acetic acid-sodium acetate buffer solution (pH 5.0) were weighed, the test tube was left to stand at 40°C for 10 to 15 minutes, 0.5 mL of an aqueous solution (enzyme solution) containing a transglucosidase was added, and the test tube was shaken well. This was left to stand at 40°C for exactly 60 minutes. After exactly 60 minutes, the test tube was placed in a boiling water bath, heated for exactly 5 minutes, and cooled in running water.
(2) In a test tube, 3 mL of a chromogenic solution of Glucose CII-Test Wako (manufactured by Wako Pure Chemical Industries, Ltd.) was weighed, 0.2 mL of the reaction solution obtained in (1) was added, and the test tube was shaken well and left to stand at 40°C for exactly 5 minutes. An absorbance (E60) of this solution at a wavelength of 505 nm was measured using water as a control. Separately, as a blank, 1 mL of a 0.02 mol/L acetic acid-sodium acetate buffer solution (pH 5.0) and 0.5 mL of an aqueous solution (enzyme solution) containing a transglucosidase were weighed in a test tube, and the test tube was heated in a boiling water bath for exactly 5 minutes, and then cooled in running water. After cooling, 1 mL of the α-methyl-D-glucoside solution was added, and an absorbance (E0) was measured by the same operation as described above.
(3) A glucose standard solution I or II of Glucose CII Test Wako was diluted with water to a specified concentration (20 mg/dL, 40 mg/dL). In a test tube, 3 mL of a Glucose CII Test Wako chromogenic solution was weighed, 0.2 mL of each of the glucose solutions was added, and the test tube was shaken well and left to stand at 40°C for exactly 5 minutes. An absorbance (ES) of this solution at a wavelength of 505 nm was measured using water as a control. Separately, as a blank, an absorbance (EB) was measured by the same operation as described above using 0.2 mL of water instead of the glucose solution. A glucose calibration curve was prepared from the obtained absorbance, and the glucose amount (μg) (G) at an absorbance difference of 1.000 was determined.

(4) The amount of enzyme that produces 1 μg of glucose per 60 minutes was defined as 1 unit (1 U), and the activity of the transglucosidase was calculated by the following formula.

[Mathematical Formula 2]

$$\text{Transglucosidase activity (U/g, U/mL)} = (E60 - E0) \times GT \times 2.5/0.2 \times n/0.5$$

E60: Absorbance of reaction solution
E0: Absorbance of blank solution
G: Glucose amount (μg) at absorbance difference of 1.000
2.5: Reaction system solution amount (mL)
0.2: Reaction solution collection amount (mL)
0.5: Enzyme solution collection amount (mL)
n: Dilution factor per 1 g or 1 mL of sample

Test Example

(1) Preparation of Oat Milk

To 300 g of oat, 1200 ml of hot water (80°C) was added, and the mixture was treated for 30 minutes with a colloid mill to obtain an oat slurry. Hot water was added to the oat slurry to give a volume of 1800 g (the total amount of water with respect to 1 part by weight of oat was 5 parts by weight), and the mixture was heated at 90°C for 15 minutes. Thereafter, coarse fibers were removed through a 60-mesh sieve and cooled to 60°C, thereby preparing oat milk. The prepared oat milk was parceled out under stirring.

(2) Enzyme Treatment

The enzymes shown in Table 2 were charged in the indicated amounts, and reacted at 60°C for 3 hours. After performing an enzyme deactivation treatment at 90°C for 15 minutes, the mixture was stirred and filtered through a sieve (100 mesh) to obtain processed oat milk.

(3) Evaluation

The processed oat milk thus obtained was subjected to sensory evaluation concerning the pH (25°C), the texture-improving effect, and the sweetness-reducing effect. The results are shown in Table 2.

<Texture-Improving Effect>

The texture-improving effect of the processed oat milk was evaluated based on the following evaluation criteria.

×: No enhancement of the creamy feeling was observed as compared with the processed oat milk of Comparative Example 1.
Δ: The creamy feeling is slightly enhanced as compared with the processed oat milk of Comparative Example 1.
o: The creamy feeling is considerably enhanced as compared with the processed oat milk of Comparative Example 1.

<Sweetness-Reducing Effect>

The sweetness-reducing effect of the processed oat milk was evaluated based on the following evaluation criteria.

∘: The sweetness is considerably lower than the sweetness of the processed oat milk of Comparative Example 1 (no sweetness is felt).
Δ: The sweetness is lower than the sweetness of the processed oat milk of Comparative Example 1 (the sweetness is slightly felt).
×: The sweetness is equal to the sweetness of the processed oat milk of Comparative Example 1 (slightly sweet).
××: The sweetness is higher than the sweetness of the processed oat milk of Comparative Example 1 (sweet).

[Table 2]

| | Comparative Example | | | | | Example |
|---|---|---|---|---|---|---|
| | 1 | 2 | 3 | 4 | 5 | 1 |
| PG (U/1 g oat protein) | 0 | 5 | 5 | 5 | 5 | 5 |
| E5NC (U/1 g oat) | 1.35 | 1.35 | 1.35 | 1.35 | 1.35 | 1.35 |
| BZ-LC (U/1 g oat) | 0 | 0 | 3 | 0 | 0 | 0 |
| HC90 (U/1 g oat) | 0 | 0 | 0 | 45 | 0 | 0 |
| GLT (GTU/1 g oat) | 0 | 0 | 0 | 0 | 1.5 | 0 |
| TGL (U/1 g oat) | 0 | 0 | 0 | 0 | 0 | 150 |
| pH | 6.3 | 6.5 | 6.5 | 6.5 | 6.6 | 6.5 |
| Creamy feeling-enhancing effect | × | × | × | × | × | ○ |
| Sweetness-reducing effect | × | × | ×× | × | ○ | ○ |
| 5 U/1 g oat protein corresponds to 0.6 U/1 g oat. | | | | | | |

As is apparent from Table 2, the creamy feeling can be enhanced by treating oat milk with a protein deamidase and a transglucosidase, and in addition, the sweetness peculiar to oat milk is also reduced, thereby obtaining processed oat milk with new texture and flavor.

## Claims

1. A production method for a processed product of a plant protein food and drink material and/or a plant protein food and drink, the production method comprising a step of treating a plant protein food and drink material and/or a plant protein food and drink with a protein deamidase and a transglucosidase.

2. The production method according to claim 1, wherein the plant protein food and drink material and/or the plant protein food and drink is oat milk.

3. The production method according to claim 1 or 2, wherein the protein deamidase is used in an amount of 0.05 U or more per 1 g of a plant protein.

4. The production method according to any of claims 1 to 3, wherein the transglucosidase is used in an amount of 5 U or more per 1 g of a plant protein raw material.

5. The production method according to any of claims 1 to 4, wherein the transglucosidase is used in an amount of 1 U or more per 1 U of the protein deamidase.

6. The production method according to any of claims 1 to 5, further comprising a step of preparing the plant protein food and drink material and/or the plant protein food and drink using 0.5 parts by weight or more of water per 1 part by weight of a plant protein raw material.

7. The production method according to any of claims 1 to 6, wherein an $\alpha$-amylase is used in combination with the protein deamidase and the transglucosidase.

8. A texture improver or a sweetness reducer for a plant protein food and drink material and/or a plant protein food and drink, the texture improver or the sweetness reducer comprising a protein deamidase and a transglucosidase.

9. Use of a combination of a protein deamidase and a transglucosidase for texture improving or sweetness reducing of a plant protein food and drink material and/or a plant protein food and drink.

# EP 4 238 421 B1

**Patentansprüche**

1. Herstellungsverfahren für ein verarbeitetes Produkt einer Lebensmittel- und Getränkezutat aus pflanzlichem Protein und/oder eines Lebensmittels und Getränks aus pflanzlichem Protein, wobei das Herstellungsverfahren einen Schritt des Behandelns einer Lebensmittel- und Getränkezutat aus pflanzlichem Protein und/oder eines Lebensmittels und Getränks aus pflanzlichem Protein mit einer Proteindeamidase und einer Transglucosidase umfasst.

2. Herstellungsverfahren nach Anspruch 1, wobei die Lebensmittel- und Getränkezutat aus pflanzlichem Protein und/oder das Lebensmittel und Getränk aus pflanzlichem Protein Hafermilch ist.

3. Herstellungsverfahren nach Anspruch 1 oder 2, wobei die Proteindeamidase in einer Menge von 0,05 U oder mehr pro 1 g pflanzlichem Protein verwendet wird.

4. Herstellungsverfahren nach einem der Ansprüche 1 bis 3, wobei die Transglucosidase in einer Menge von 5 U oder mehr pro 1 g eines Rohmaterials aus pflanzlichem Protein verwendet wird.

5. Herstellungsverfahren nach einem der Ansprüche 1 bis 4, wobei die Transglucosidase in einer Menge von 1 U oder mehr pro 1 U der Proteindeamidase verwendet wird.

6. Herstellungsverfahren nach einem der Ansprüche 1 bis 5, weiter umfassend einen Schritt des Zubereitens der Lebensmittel- und Getränkezutat aus pflanzlichem Protein und/oder des Lebensmittels und Getränks aus pflanzlichem Protein unter Verwendung von 0,5 Gewichtsteilen oder mehr Wasser pro 1 Gewichtsteil eines Rohmaterials aus pflanzlichem Protein.

7. Herstellungsverfahren nach einem der Ansprüche 1 bis 6, wobei eine $\alpha$-Amylase in Kombination mit der Proteindeamidase und der Transglucosidase verwendet wird.

8. Texturverbesserer oder Süßungsminderer für eine Lebensmittel- und Getränkezutat aus pflanzlichem Protein und/oder ein Lebensmittel und Getränk aus pflanzlichem Protein, wobei der Texturverbesserer oder der Süßungsminderer eine Proteindeamidase und eine Transglucosidase umfasst.

9. Verwendung einer Kombination aus einer Proteindeamidase und einer Transglucosidase zur Texturverbesserung oder Süßungsminderung einer Lebensmittel- und Getränkezutat aus pflanzlichem Protein und/oder eines Lebensmittels und Getränks aus pflanzlichem Protein.

**Revendications**

1. Procédé de production pour un produit transformé d'une matière pour aliment et boisson en protéine végétale et/ou un aliment et une boisson en protéine végétale, le procédé de production comprenant une étape de traitement d'une matière pour aliment et boisson en protéine végétale et/ou d'un aliment et d'une boisson en protéine végétale avec une protéine désamidase et une transglucosidase.

2. Procédé de production selon la revendication 1, dans lequel la matière pour aliment et boisson en protéine végétale et/ou l'aliment et la boisson en protéine végétale est du lait d'avoine.

3. Procédé de production selon la revendication 1 ou 2, dans lequel la protéine désamidase est utilisée en une quantité de 0,05U ou plus pour 1 g d'une protéine végétale.

4. Procédé de production selon l'une quelconque des revendications 1 à 3, dans lequel la transglucosidase est utilisée en une quantité de 5 U ou plus pour 1 g d'une matière première de protéine végétale.

5. Procédé de production selon l'une quelconque des revendications 1 à 4, dans lequel la transglucosidase est utilisée en une quantité de 1 U ou plus pour 1 U de la protéine désamidase.

6. Procédé de production selon l'une quelconque des revendications 1 à 5, comprenant en outre une étape de préparation de la matière pour aliment et boisson en protéine végétale et/ou l'aliment et la boisson en protéine végétale en utilisant 0,5 partie en poids ou plus d'eau pour 1 partie en poids d'une matière première de protéine végétale.

7. Procédé de production selon l'une quelconque des revendications 1 à 6, dans lequel une $\alpha$-amylase est utilisée en combinaison avec la protéine désamidase et la transglucosidase.

8. Améliorant de texture ou réducteur de teneur en sucre pour une matière pour aliment et boisson en protéine végétale et/ou un aliment et une boisson en protéine végétale, l'améliorant de texture ou le réducteur de teneur en sucre comprenant une protéine désamidase et une transglucosidase.

9. Utilisation d'une combinaison d'une protéine désamidase et d'une transglucosidase pour améliorer la texture ou réduire la teneur en sucre d'une matière pour aliment et boisson en protéine végétale et/ou d'un aliment et d'une boisson en protéine végétale.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000050887 A
- JP 2008283900 A
- JP 2015159765 A
- US 6451361 B1
- CN 101991163 A
- US 2017318841 A1
- JP 2012034654 A
- JP 2001218590 A
- WO 2006075772 A1
- JP 2001046096 A
- JP 2002017395 A
- JP 2002125692 A
- WO 2016063331 A1